# EUROPEAN PATENT APPLICATION

(11) **EP 3 693 208 A1**
(43) Date of publication of application: **12.08.2020**
(21) Application number: 19215978.8
(22) Date of filing: 13.12.2019
(51) Int. Cl.: B60M 1/24, B60M 1/00

(54) **FASTENING SYSTEM OF RELEASABLE TYPE FOR FASTENING A CABLE TO A BODY, PREFERABLY AN ELECTRICAL CABLE FASTENED ONTO THE BACK OF ANOTHER CABLE IN AN ELECTRIFIED RAILWAY LINE**

(30) Priority: 11.02.2019 IT 201900001961
(71) Applicant: Lef Holding S.r.l., 50019 Sesto Fiorentino (IT)
(72) Inventor: CAVALIERI, Filippo, 59015 Carmignano (IT)
(74) Representative: Emmi, Mario

(57) **Abstract**

The present invention relates to a fastening clip for constraining a cable above a body, preferably another cable, the fastening clip comprising:
- An upper part (31) delimiting a first containment volume for containing the cable to be fastened;
- Two lateral walls (32), branching off from said upper part (31), said two lateral walls delimiting a second containment volume suitable for containing, in use, at least in part the body;
- Characterized by the fact of comprising at least a protruding tooth (41) arranged on at least one of said two lateral walls and facing towards the inside of the said containment volume.

## Description

### Technical field

The present invention relates to the technical field of fastening devices of a cable to another element, in particular in the field of power supply for trains, underground railways and the like.

In particular, the invention relates to an innovative fastening device in the form of an elastic clip which enables to fasten readily a cable to another body, for example a heating body in contact with another cable or other element to heat.

### Brief outline of prior art

In railway field many cables exist, some of them are electrical for supplying components, for example.

Some applications may require to fasten two of said cables together.

At the same time, it may be necessary not only to fasten the cables together but also to remove it readily, if necessary, and the fastening must not be affected negatively by vibrations caused by the passage of train.

In fact, vibrations may often cause stresses which, if repeated over time, may cause separations between the components.

The same need may obviously be also required in technical fields different from railway field.

Publication CN 201 457 120 is also known.

### Summary of the invention

Therefore, the aim of the present invention is to provide an innovative device, which resolves said technical drawbacks.

In particular, the aim of the present invention is to provide a fastening device capable of fastening a cable in safe and releasable manner to another component, preferably another cable, both in railway field and in other fields.

A further aim of the present invention is to provide a fastening device which is firm even in the event of repeated vibrations and/ or accelerations, for example like in the railway field during the passage of trains.

Therefore, these and other aims are achieved with the present fastening clip for constraining a cable to another body, preferably another cable or tubular element in general, according to claim 1.

This fastening clip comprises:
- An upper part (31) delimiting a first containment volume for containing the cable to be fastened;
- Two lateral walls (32), branching off from said upper part (31), said two lateral walls delimiting a second containment volume suitable for containing, in use, at least in part the body;

According to the invention there is comprised at least a protruding tooth (41), i.e. a fastening tooth, arranged on at least one of said two lateral walls facing towards the inside of the said containment volume.

In this manner all the aforesaid technical drawbacks are readily resolved.

In particular, when the clip is applied to fasten the cable to the body, the body is within said first containment volume and with said lateral walls which wind at least in part the body so that the tooth fastens the body.

By means of the presence of the teeth the fastening is safe and firm.

It acts like a sort of hook which cramps the body to be fastened. In this manner, the possible vibrations and/or acceleration present during the use make the tooth increase or modify the bending degree thereof thus increasing the penetration and fastening degree thereof by means of the vibrations themselves.

Therefore, this system, in simple and innovative manner, is even capable of increasing the fastening by means of the potential presence of vibrations themselves.

Advantageously, said upper part (31) has a semi-circular shape in transversal section, as well as equivalent shapes such as elliptical or squared or rectangular provided that is it suitable to contain a cable.

Obviously, the circular shape is the preferred one.

Advantageously, both said lateral walls comprise a first section (32') folded outwards with respect to the upper part and a second section (32") folded inwards so that each wall has at least a part with V-shaped conformation rotated by 90 degrees.

Advantageously, said lateral wall (32) comprises a rectilinear section comprised between the lower end of the upper part (31) having a semi-circular shape and the upper end of the first section (32') which determines the V-shaped conformation.

Advantageously, two lateral walls (32) comprise at least a notch which generates an opening (40) in the said lateral wall, said opening being delimited by an edge (41') whose end (41) is folded for forming the said protruding tooth (41).

Advantageously, said folded end is generally triangular-shaped and is obtained by the corner formed by the lower edge of the lateral wall and by the edge (41') of the notch which goes up starting from the lower edge of said lateral wall (32).

Advantageously, there are comprised two notches for each lateral wall, each notch forming a protruding tooth.

Advantageously, the length of the lateral wall is comprised from 15mm and 25mm, preferably 20mm.

Advantageously, the height of the fastening clip is comprised from 7mm and 9mm, preferably 8mm.

It is also described here a method for fastening a cable to a body, the method comprising the phase of:
- Arrangement of a fastening clip as previously described;
- The arrangement of the cable onto the body and;
- The application of the said clip so that the cable is inside the first containment volume and with the body arranged in the second containment volume with the cable arranged in contact with the body and with said legs of the elastic clip which laterally hold the body so that at least a tooth crimps the body.

It is also described here a heating system for preventing/stopping the ice formation onto the electrical contact cable (100) of a catenary for railway convoys, the system comprising:
- A heating electrical cable (10);
- Fastening means (30) for applying the said heating electrical cable (10) along a predetermined section of the contact cable (100) so that the said heating cable (10) is at least partially in contact with said contact cable (100);
- An apparatus of electrical supply (51, 52, 53) electrically connected with said heating electrical cable (10) in order to cause the passage of current thereof.
- Said fastening means are preferably in the form of the above-described clip.

### Brief description of the drawings

Additional features and advantages of the present fastening device, according to the invention, will become apparent from the following description of some preferred embodiments thereof, given only by way of non-limiting example, with reference to the attached drawings, wherein:
- Figure 1 depicts a schematization of a heating assembly to which the clip can be applied according to the invention;
- Figure 2 outlines the passage of a train with the pantograph in contact with the electrified overhead line onto which the above-mentioned system is applied;
- Figure 3 and figure 4 depict in greater details the circuit diagram for managing/generating electric current for generating heat;
- Figure 5 depicts instead in an axonometric view, a couple of clips arranged besides each other, which enable the removable fastening of the heating cable 10 to the overhead line of electric supply 100;
- Figures 6 and 7 depict in two axonometric views the whole supply cable 100 (or contact cable in other words) of the railway convoy on which the heating cable 10 is fastened through such fastening devices of removable type;
- Figure 8 depicts a section of the contact cable 100 on which the heating cable 10 is arranged with the fastening device depicted in section;
- Figure 9 is a transversal section of the fastening device only;
- Figure 10 depicts two further axonometric views of the present elastic clip in order to highlight the shape of lateral notches 40;
- Figure 11 depicts in enlarged axonometric view the detail B of the notch depicted in figure 10;
- Figure 12 depicts two further front and lateral views with some preferred sizes.

### Description of some preferred embodiments

The present invention is described here with reference to the application of a heating cable 10 in railway field to a contact cable 100.

However, as mentioned, the present invention is not limited to this specific application and could also be used for different applications.

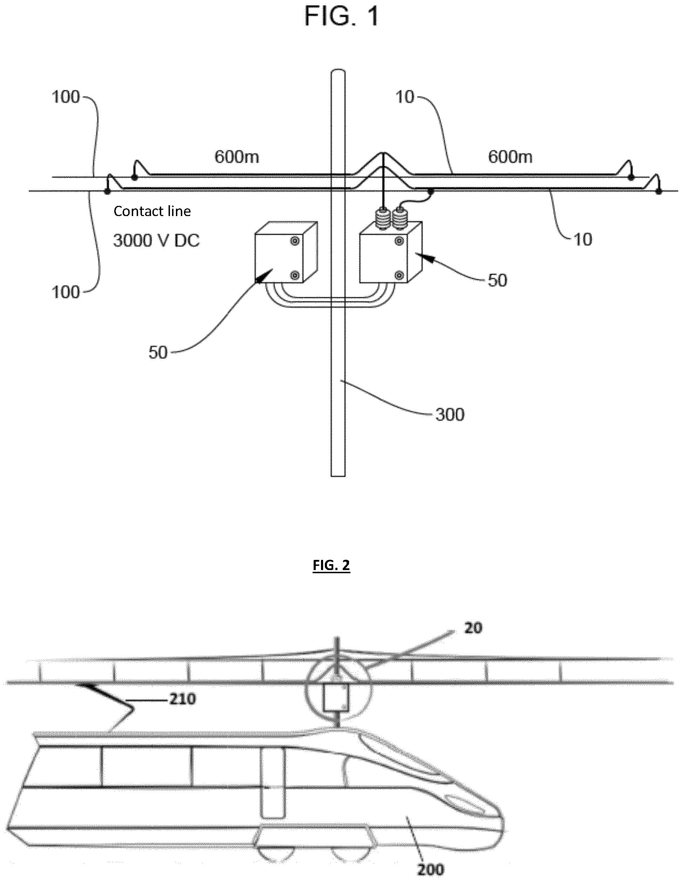

The invention is schematically described with reference to figure 1 and figure 2.

Figure 1 and figure 2 depict with number 100 the contact cable in which the current supplying the train 200 passes during its passage by means of the pantograph 210 which is brought in contact with said cables through a motion of extraction/retraction.

The electrical supply system of the train through the use of the pantograph 210 is known art and it is not the subject of the specific invention, thus it is not described in further details.

Figure 1 depicts with number 300 the support pole of the overhead line on which the described system can be assembled.

The contact line is generally supplied with 3000 V direct current DC and as well this is a constructive standard of railway lines which is not the subject of the present invention.

As described thereinafter, even if the present heating system is applied onto railway lines supplied with 3000V DC, it could be anyway applied to any lines, for example underground lines, even with different electrical supplies, by simply adapting some elements in routinary way.

By describing the invention in greater details, the assembly subject of the present invention is fitted with three components cooperating with one another:
The first component is constituted by the heating cable 10, therefore by a cable where current circulates in order to produce heat by Joule effect.

In figure 1, these cables are indicated by number 10 and are spread out and along the back of the contact cable 100 for a predetermined length, for example 1200 m. As a matter of facts, they lay onto the back of the contact line 100, so as to keep clear the belly of the said contact line 100 which is clear to contact the pantograph of the train during its passage (see for example schematization of figure 2).

It is obvious that any lengths of said heating cables 10 can be provided and they can be arranged even in sections along the line depending on needs.

Obviously, the heating cable 10 must be arranged in firm manner on the back of the contact cable, so that it does not hang laterally but is adherent and spread out on the cable 100. In fact, in the event of loose walls, there would be the risk of being stripped away by the train during its passage by means of the pantograph 210.

Going further with the structural description of the invention, with reference to figures from 5 to 12, suitable fastening means are described which enables not only a removable connection of the cable but also a firm, stable connection which resists vibrations thus ensuring a high safety standard.

The fastening system described in details below enables not only a fast, firm and safe and at the same time removable application of the heating cable 10 to the contact cable 100, but it is obviously engineered so as not to exceed the belly part of the contact cable 100 and thus keeping it clear for the passage of the pantograph of the train.

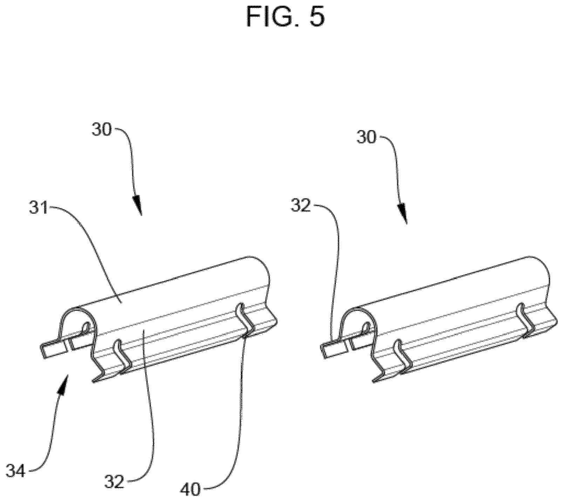

Figure 5 depicts a succession of two of them, since, depending on the length of the section of contact cable 100 to be covered, it will be necessary to arrange in succession a series of such fastening means in order to fasten the heating cable 10 along the equivalent length, thus avoiding that loose parts hang dangerously downwards and then they will remain trapped in the pantograph 210 and will be torn away by the passage of the train.

The more the heating cable 10 remains spread out in contact with the contact line 100 the better is obviously the effect of heating, thus avoiding risks that the cable is accidentally torn away by the passage of the train.

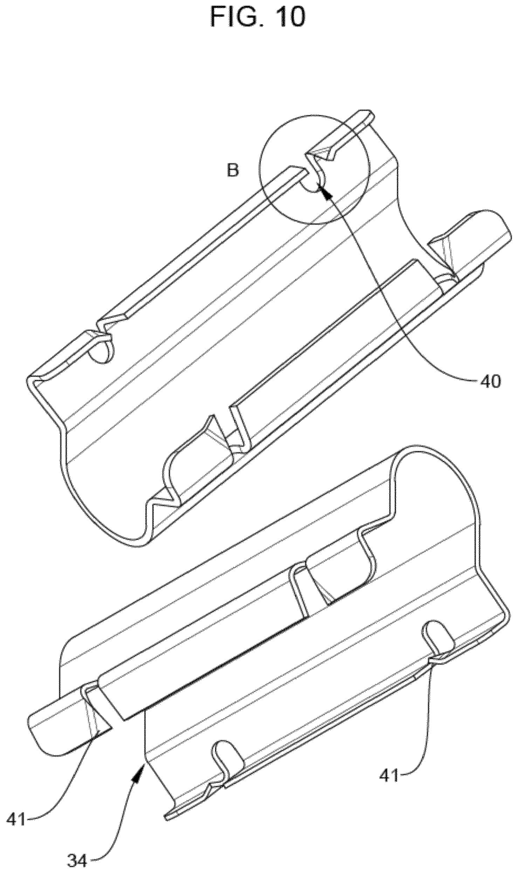

Figure 5, as well as figure 10, depict structurally an axonometric view of two of such fastening devices 30.

As mentioned, depending on the length to be covered, a plurality of them, or a thousand could be used if the line to be covered is long.

In fact, generally, it is advisable to apply them besides one another, practically in continuous succession or, alternatively, at a preset pitch which does not exceed one-meter distance from one another.

Therefore, it is immediately inferable that thousands of such devices in succession would be necessary to cover the length of some kilometers.

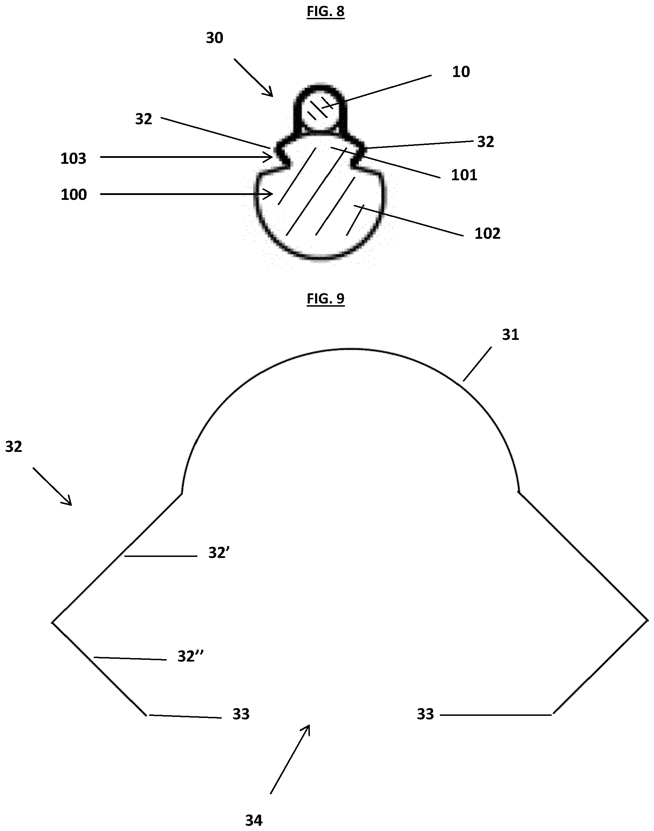

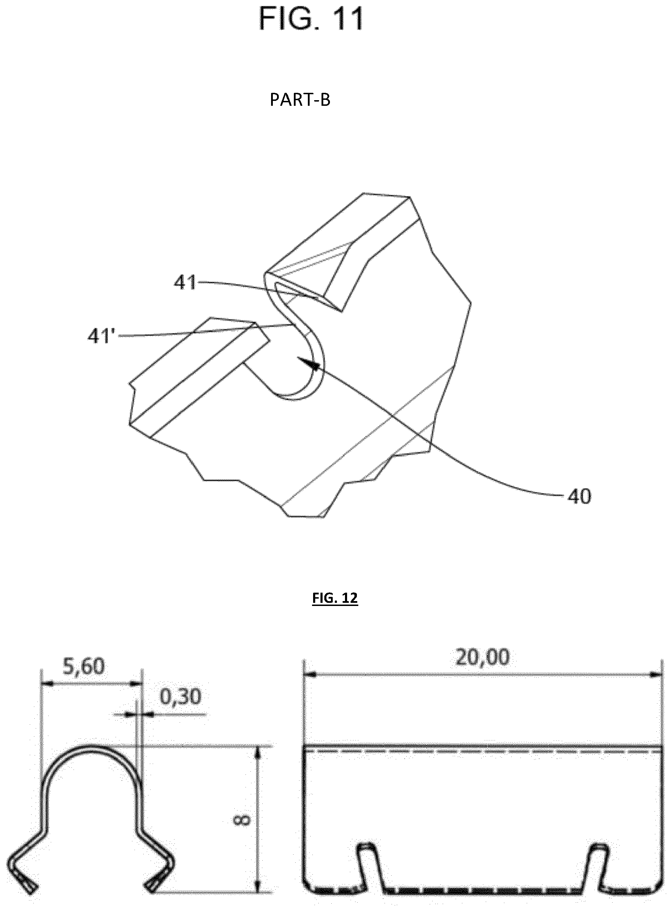

Therefore, as depicted in figure 5 and figure 10, such fastening means are in the form of an elastically deformable element, such as metal, with the purpose of elastic clip, like a clothes-peg. Therefore, figure 5 (see also section of figure 9, section of figure 12 and axonometric view of figure 10) depicts an upper part 31 with semi-circular shape or the like and such as to retrace accurately or substantially the shape of the heating cable 10. From this semi-circular upper part 31 two lateral wings 32 branch off which constitute the fixing elements which fasten to the surface of the contact cable 100. As well inferable from figure 5 and figure 9 and figure 12 which are two views in transversal section, the two lateral wings which branch off from the dome 31 end with the lower edges spaced from one another and thus defining an opening 34, through which the said clip is fastened to the contact cable 100.

Therefore, the assembly of the dome 31 and the two legs forms an overall inner channel having an access delimited by the distance of said lower edges of the lateral walls and internally delimited by said lateral walls and the upper edge. Therefore, the legs form the lateral walls.

Figure 12 well depicts front and lateral view.

No lateral wall 32 is rectilinear but has a V shape rotated by 90 degrees.

With reference to figure 9 and figure 12 it is provided a side 32' inclined outwards and a side 32'' folded inwards, preferably more or less 90 degrees with respect to the side 32'.

The solution of figure 12 is identical to that of figure 9 except for the fact that the solution of figure 12 provides a section of wall of rectilinear joint between the edge of the semicircular upper part and the V-shaped part of wall, which can be provided depending on the intended uses of the clip.

The V-shape of the lateral wall, at least in the final section thereof, optimizes the fastening, when it must fix bodies with irregular shape which form sharp edges like the exemplifying case.

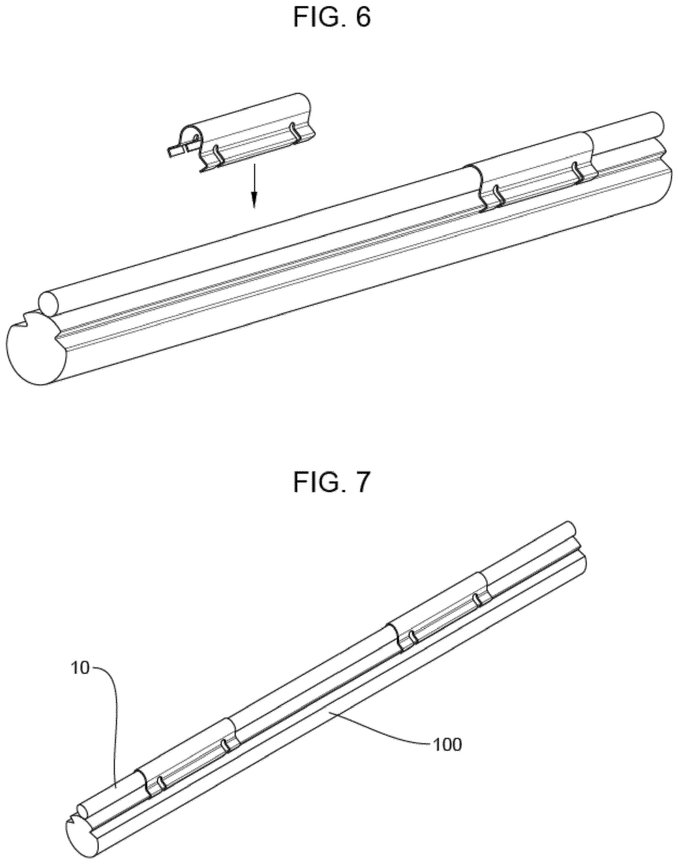

Figure 6 depicts an example of application, depicting with the arrow the direction of application of the clip under examination which is pressed against the cable 10 arranged onto the back of the contact rod 100. The two wings (or legs in other words) 32 spread out elastically by increasing their relative distance to reach the fastening position (depicted in figure 7) in which they fix a corner of the cable 100 to which they fasten and with the electrical heating cable 10 firmly maintained in position on the back of the cable 100 within the dome 31.

The section of figure 8 depicts, for clearing purposes in transversal section, the heating cable 10 maintained on the back of the contact cable 100 by means of the elastic clip 30 which fixes through its wings 32 the lateral edge of the contact cable 100.

The contact cable 100 (electric traction) both for railway lines of traditional type (3000Vdc) and high-speed trains (25KVac) has a cylindrical shape shaped with sections from 80mmq to 150mmq.

Therefore, it is shaped like a full tube with a certain stiffness. It is generally machined on its back by removing material or through extrusion or lamination which shape it with an upper part 101 which forms a sort of angular sector 101 which joins the remaining underlying circular part 102.

Practically, the triangular segments 103 are removed from the sides, thus creating on the two sides two lateral walls arranged each other in a V shape rotated by 90 angular degrees which constitute a great fixing edge for the legs 32 which are in form of a complementary V (compare for example figure 8 and figure 9).

The shape of the contact cable 100 is known art and it is not the specific subject of the present invention, thus it is not described in further details.

Therefore, in this manner, during the application the two legs 32 stretch apart causing the elastic clip being astride onto the cable 10 with the legs 12 which enlarge to close elastically afterwards by fixing elastically the upper edge 101 of the cable 100.

The size of the described clip is selected so as to firmly fix the cable 10 and the cable 100 by maintaining them in contact and a predetermined number of such clips can be arranged along the line depending on needs.

Figure 12 depicts some sizes in millimeters which are optimal and preferred.

The overall longitudinal length is 2 cm only, with a height of 8 mm only and thickness of 0.3 mm only (practically a highly flexible sheet metal).

Obviously, other sizes may be used.

The elastic clip may be made from various metals or alloys. For example, it can be made from steel (for example inox steel) or iron, as well as alloys of bronze or brass. It might alternatively be made not necessarily from metal material but for example plastic.

Along the sides, i.e. the legs which form the lateral walls 32, there are two notches 40 for each side, which are well highlighted in figure 11, enlargement B and in figure 10.

As it is clearly inferable from figure 11, the purpose of notches is to remove a small area 40, for example U-shaped, obviously with smaller height with respect to the overall height of the lateral wall 32, by starting from the lower edge of the lateral wall. The removed material forms an opening 40 having a certain edge 41' forming a corner 41 which is foldable inwards, i.e. towards the housing 34, thus forming a folded tooth 41 or a sort of hook. It is generally triangular-shaped, folded inwards, i.e. towards the housing 34.

This tooth 41 folded inwards forms a sharp pointed corner which pricks and therefore better fixes the cable 100 in its contact point.

The sharp corner which forms the tooth 41 is the one formed by the wall of the notch with the lower edge of the same lateral wall which is cut.

Moreover, being the thicknesses very thin (i.e. well below one millimeter) the tooth 41 deforms easily thus elastically bending and folding further both in permanent manner and with a bending having spring back.

This has an effect of optimizing remarkably the fixing since, due to the vibrations of the passage of the train, this shape of the tooth is such that it deforms further by folding more inwards and thus increasing its fixing degree. In practical, vibrations which cause generally the accidental removal of components, is this case favour and increase the fixing of the clip, which by means of this small tooth which varies its deformation (potentially by deforming further and/or returning elastically to an original position), increases its protrusion towards the housing 34, thus optimizing the fixing.

However, the present elastic clip, even intended for this heating system, could be used even for other applications different from the described one, for example for fastening other components always in railway and non-railway field.

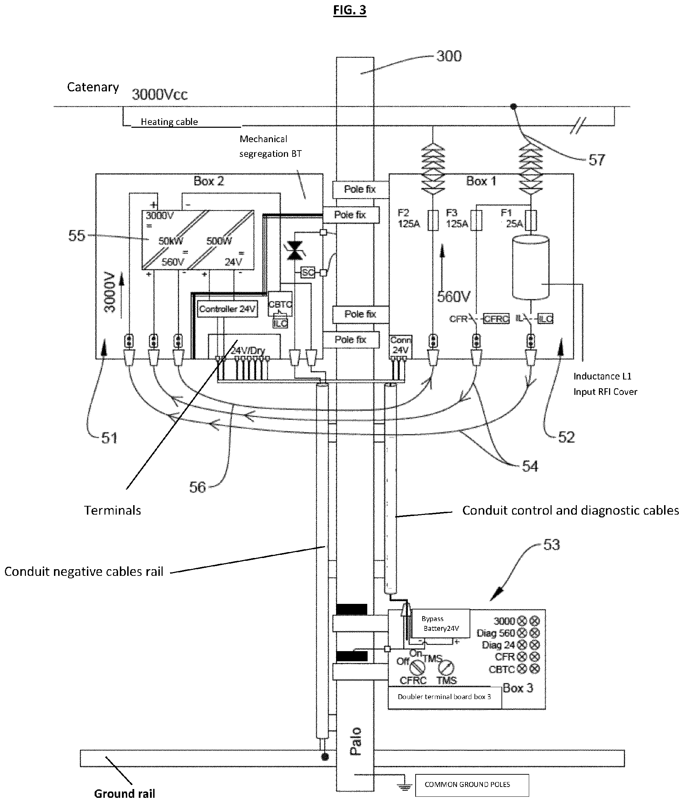

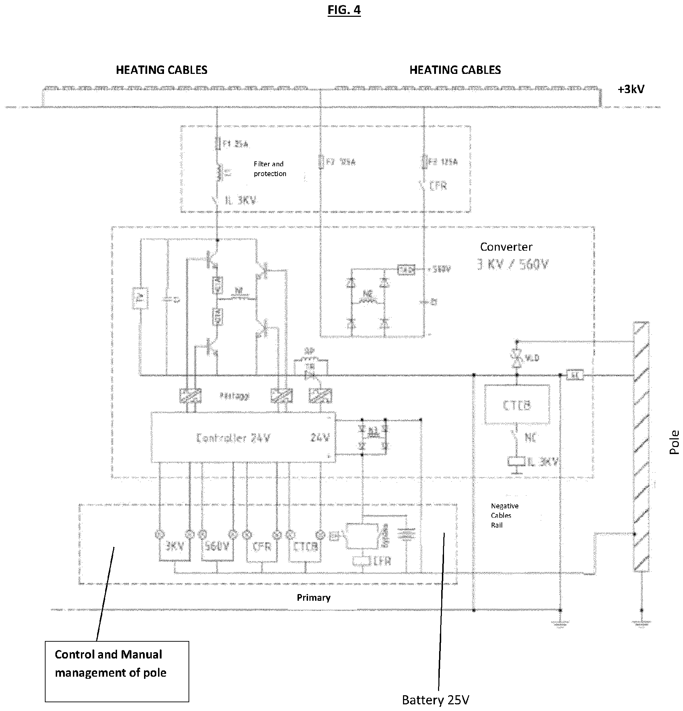

The third present component is a system for converting 3000V DC tension collected from the line to a 540V DC tension for generating a suitable current intended for circulating in the cable 10 with the only purpose of generating heat. It is depicted with reference to figure 3 and 4.

This converter system is well described in figure 3 wherein it is highlighted the pole 300 to which it is fastened.

There are provided three boxes for containing electronic componentry and in particular:
- Box 52 (also named BOX_1);
- Box 52 (also named BOX_2);
- Box 53.

Box 53 is electrically communicating with boxes 51 and 52 arranged at a certain height on the pole 300 in proximity of the contact line 100 (therefore generally at a height of approximately 6 m from the ground).

Box 53 has the only purpose of monitoring, that is it indicates the operating state of the system and main values or parameters, etc. Therefore, box 53 is a sort of control panel arranged at the base of the pole 300 for an easy access, with the purpose of enabling an operator to monitor data, such as maintenance inspections.

Therefore, it is not an essential component of the invention.

The panel 53 operates at a very low tension (24V) which is always produced and supplied by the main converter described thereinafter.

Boxes 52 and 53 form in their whole the above-mentioned converter which collects tension from the 3000 V line of the train and converts it to a tension suitable for supplying the cable 10 to create heat for Joule effect.

Figure 3 depicts with number 57 the electrical cable which collect the tension of the 3000 Vdc catenary and transfers it through cables 54 (see the direction of arrows applied to cables) to the converter 55 arranged in the box 51.

The highly insulated transformer receives 3000 V from the catenary and transforms them in 560 V DC approximately, which serve for generating the circulation of current in the heating cable 10.

Number 56 highlights the return cable (see in fact the direction of arrow) which supplies 560V to the heating cable 10.

In greater details, the transformer 55 is formed by a part with suitable electric coils which transform a part of inlet 3000V tension to 560V tension while another part of the transformer provides coils necessary to obtain separately 24V tension for supplying controls, aux controls and signaling.

For example, an inner self-control may provide temperature sensors which control the activation of the system when temperature drops below a preset threshold value.

According to the invention and its structure, this system does not need any supply batteries since this structure, which is installable along the line in the necessary sections by using pre-existing support poles 300, is self-supplying by collecting directly from the catenary the necessary voltage and converting it to a voltage suitable for such purposes.

In this manner, even inaccessible areas may be easily covered by this system, thus remarkably saving costs for buying and installing batteries which may easily break down for extreme conditions.

Nevertheless, that having been said, it might be possible to apply supply batteries connected to the heating cable 10 in place of the converter system (51, 52, 53) in order to generate heat.

For example, batteries might be rechargeable and equipped with solar panels.

Nevertheless, in this case the technical drawback would be that batteries might run down and/or break down, thus requiring certainly more frequent maintenance call-outs.

Therefore, box 52 (box_1) contains inside the 560 V tension inlet with protections as already described and the sectioning (i.e. opening/closing) with various protection filters (see figure 3 and figure 4).

As mentioned, the conversion from 3000 V to 560 V occurs in box 51 while a 500W part serves for maintaining the system and auxiliary parts on.

## Claims

1. A fastening elastic clip for constraining a cable to a body, preferably another cable, the said fastening elastic clip comprising:
- An upper part (31) delimiting a first containment volume for containing the cable to be fastened to the body;
- Two lateral walls (32), branching off from said upper part (31), said two lateral walls delimiting a second containment volume suitable for containing, in use, at least in part the body;
- **Characterized by the fact of** at least a protruding tooth (41), arranged on at least one of said two lateral walls facing towards the inside of the said containment volume, is comprised.

2. A fastening elastic clip, as per claim 1, wherein the said upper part (31) has a semi-circular shape in transversal section.

3. A fastening elastic clip, as per claim 1, wherein both said two lateral walls comprise a first section (32') folded outwards with respect to the upper part and a second section (32'') folded inwards so that each wall has at least a part with V-shaped conformation rotated by 90 degrees.

4. A fastening elastic clip, as per one or more of the preceding claims, wherein said lateral wall (32) comprises a rectilinear section comprised between the lower end of the upper part (31) having a semi-circular shape and the upper end of the first section (32') which determines the V-shaped conformation.

5. A fastening elastic clip, as per one or more of the preceding claims, wherein said two lateral walls (32) comprise at least a notch which generates an opening (40) in the said lateral wall, said opening being delimited by an edge (41') whose end (41) is folded for forming the said protruding tooth (41).

6. A fastening elastic clip, as per one or more of the preceding claims, wherein said folded end is generally triangular-shaped and is obtained by the corner formed by the lower edge of the lateral wall and by the edge (41') of the notch which goes up starting from the lower edge of said lateral wall (32).

7. A fastening elastic clip, as per one or more of the preceding claims, comprising two notches for each lateral wall, each notch forming a protruding tooth.

8. A fastening elastic clip, as per one or more of the preceding claims, wherein the length of the lateral wall is comprised from 15mm and 25mm, preferably 20mm.

9. A fastening elastic clip, as per one or more of the preceding claims, wherein the height of the fastening clip is comprised from 7mm and 9mm, preferably 8mm.

10. A fastening elastic clip, as per claim 1, wherein the said elastic clip is an elastically deformable element for achieving the fastening.

11. A fastening elastic clip, as per claim 1 or 10, wherein the two lateral walls (32) which branches off from said upper wall are elastically flexible so that, during the application to achieve the fastening, they can enlarge elastically by increasing their relative distance to reach the fastening position.

12. A fastening elastic clip, as per one or more of the preceding claims, wherein the said clip is a single continuous piece.

13. A method for fastening a cable to a body, the method comprising the phase of:
- Arrangement of a fastening elastic clip as per one or more of the preceding claims from 1 to 12;
- The arrangement of the cable onto the body and;
- The application of the elastic said clip so that the cable is inside the first containment volume and with the body arranged in the second containment volume with the cable arranged in contact with the body and with said legs of the elastic clip which laterally hold the body so that at least a tooth crimps the body.
